# EUROPÄISCHE PATENTANMELDUNG

(11) **EP 2 065 159 A1**
(43) Veröffentlichungstag der Anmeldung: **03.06.2009**
(21) Anmeldenummer: 08017941.9
(22) Anmeldetag: 14.10.2008
(51) Int. Cl.: B29C 47/12, B29C 53/30, B29D 23/18

(54) **Vorrichtung zur fortlaufenden Herstellung eines Verbundrohres mit Rohrmuffe**

(30) Priorität: 28.11.2007 DE 202007016630 U
(71) Anmelder: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(57) **Zusammenfassung**

Eine Vorrichtung zur fortlaufenden Herstellung eines Verbundrohres umfasst Halbkokillen (12), die sich jeweils paarweise zu einer Formstrecke ergänzen, wobei zumindest in einem Paar Halbkokillen (12) eine Muffen-Ausnehmung gebildet ist, die in Förderrichtung (4) eine Erstreckung b aufweist. Weiterhin ist ein Spritzkopf vorgesehen, aus dem eine Außen-Düse (22) und eine Innen-Düse (21) ausmünden, die in Förderrichtung (4) einen Abstand a voneinander haben. Für den Abstand a der Innen-Düse (21) von der Außen-Düse (22) bezüglich der Erstreckung b der Muffen-Ausnehmung in Förderrichtung (4) gilt a ≥ b.

## Beschreibung

Die Erfmdung betrifft eine Vorrichtung zur fortlaufenden Herstellung eines Verbundrohres mit Rohr-Muffe nach dem Oberbegriff des Anspruches 1.

Eine derartige Vorrichtung ist beispielsweise aus der EP 1 612 030 A1 (entspr. US 7,238,317 B1) bekannt. Je größer die Nennweiten der Rohre werden, umso größer werden die Wellenberge und damit auch die relative Vergrößerung der Rohr-Muffe gegenüber dem Innendurchmesser des Verbundrohres. Dies ist darauf zurückzuführen, dass das normale Verbundrohr in vielen Fällen auch als Spitzende des Rohres verwendet wird, dass also ein Verbundrohr mit den Wellenbergen in die Rohr-Muffe eingeführt wird. Die Übergangs-Abschnitte zwischen dem bei der in-line-Herstellung voreilenden Verbundrohr und der Rohr-Muffe einerseits und der Rohr-Muffe und dem nacheilenden Verbundrohr andererseits haben also eine beträchtliche radiale Erstreckung. Insbesondere der auch nach der Durchtrennung des endlosen Rohrstrangs verbleibende Übergangs-Abschnitt zwischen Verbundrohr und Rohr-Muffe soll eine ausgeprägte radiale Erstreckung haben, also bezogen auf die Mittel-Längs-Achse steil nach außen gerichtet sein, damit beim Einführen des Spitzendes in die Rohr-Muffe bis an den Übergangs-Abschnitt heran keine Toträume bzw. keine erheblichen Toträume entstehen, in denen sich Schmutz ablagern kann. Je größer die Nennweiten sind und/oder je größer die Produktionsgeschwindigkeit ist, desto größer ist die Gefahr, dass im Bereich des Übergangs-Abschnitts und am Muffen-Anfang und Muffen-Ende der Innen-Schlauch sich nicht vollflächig an den Außen-Schlauch anlegt. Bei der aus der EP 1 612 030 A1 (entspr. US 7,238,317 B1) bekannten Vorrichtung sind diese Probleme dadurch gelöst worden, dass in dem mindestens einen Ringsteg eine die Übergangs-Fläche mit der benachbarten ringförmigen Formausnehmung verbindende Ausnehmung vorgesehen ist. Hierdurch wird der Raum zwischen dem Innen-Schlauch und dem Außen-Schlauch im Bereich des Übergangs-Abschnitts, also am Übergang vom Verbundrohr zur Rohr-Muffe entlüftet, so dass der Innen-Schlauch vollflächig durch den auf ihn von außen ausgeübten Druck gegen den entsprechenden Bereich des Außen-Schlauches gedrückt und mit diesem verschweißt wird. Diese Lösung hat sich außerordentlich bewehrt. Insbesondere bei sehr großen Nennweiten der Rohre können aber immer noch Probleme bei einer Ausformung der Rohr-Muffe bei doppelwandigen Verbundrohren auftreten.

Der Erfmdung liegt daher die Aufgabe zugrunde, eine Vorrichtung der gattungsgemäßen Art derart weiterzubilden, dass auch bei großen Nennweiten eine gute Ausformung der Rohr-Muffe erreicht wird.

Diese Aufgabe wird erfindungsgemäß durch die Merkmale im Kennzeichnungsteil des Anspruches 1 erreicht. Der Kern der Erfindung liegt darin, dass die Vorrichtung derartig ausgebildet wird, dass die Ausformung der Rohr-Muffe aus dem aus der Innen-Düse austretenden Innen-Schlauch überhaupt erst beginnt, wenn der aus der Außen-Düse austretende Außen-Schlauch im Bereich der Muffen-Ausnehmung vollständig gegen diese angelegt ist und dieses Anliegen an den beiden die Muffen-Ausnehmung begrenzenden Ringstegen abgedichtet ist. Im Bereich der auszuformenden Rohr-Muffe hat der Außen-Schlauch bereits seine definierte Form, wenn der Abschnitt des Innen-Schlauches extrudiert wird, der zur Bildung der Rohr-Muffe eingesetzt wird. Selbstverständlich kann der Abstand von Innen-Düse und Außen-Düse auch noch größer gemacht werden, so dass bei Beginn der Extrusion des zur Rohr-Muffe zu verformenden Innen-Schlauches der Außen-Schlauch bereits mehrere stromaufwärtige und stromabwärtige Ringstege überdeckt.

Weitere vorteilhafte Ausgestaltungen ergeben sich aus den Unteransprüchen.

Weitere Merkmale, Vorteile und Einzelheiten der Erfmdung ergeben sich aus der nachfolgenden Beschreibung eines Ausführungsbeispiels anhand der Zeichnung. Es zeigt
- Fig. 1: eine im Wesentlichen aus zwei Extrudern, einer Formma- schine und einer Nachkühlvorrichtung bestehende Anlage zur Herstellung von Verbundrohren mit Rohr-Muffen in Draufsicht in schematischer Darstellung,
- Fig. 2: einen Spritzkopf und das Einlaufende der Formma- schine im Horizontalschnitt,
- Fig. 3: einen vertikalen Teil-Längsschnitt durch die Form- maschine während der Herstellung eines normalen Verbundrohres unmittelbar vor Beginn der Herstel- lung einer Rohr-Muffe,
- Fig. 4: den vertikalen Teil-Längsschnitt gemäß Fig. 3 in ei- ner Position während der Herstellung der Rohr- Muffe,
- Fig. 5: den vertikalen Teil-Längsschnitt entsprechend Fig. 3 und 4 in einer Position während der fortschreitenden Herstellung der Rohr-Muffe,
- Fig. 6: einen vergrößerten Teil-Ausschnitt gemäß der Linie VI in Fig. 5,
- Fig. 7: den vertikalen Teil-Längsschnitt gemäß den Fig. 3, 4, 5 am Ende der Herstellung der Rohr-Muffe,
- Fig. 8: den vertikalen Teil-Längsschnitt gemäß den Fig. 3, 4, 5, 7 während der nachfolgenden Herstellung eines normalen Verbundrohres,
- Fig. 9: ein auf der Anlage hergestelltes Verbundrohr mit Rohr-Muffe und
- Fig. 10: einen Querschnitt durch das Verbundrohr gemäß der Schnittlinie X-X in Fig. 9.

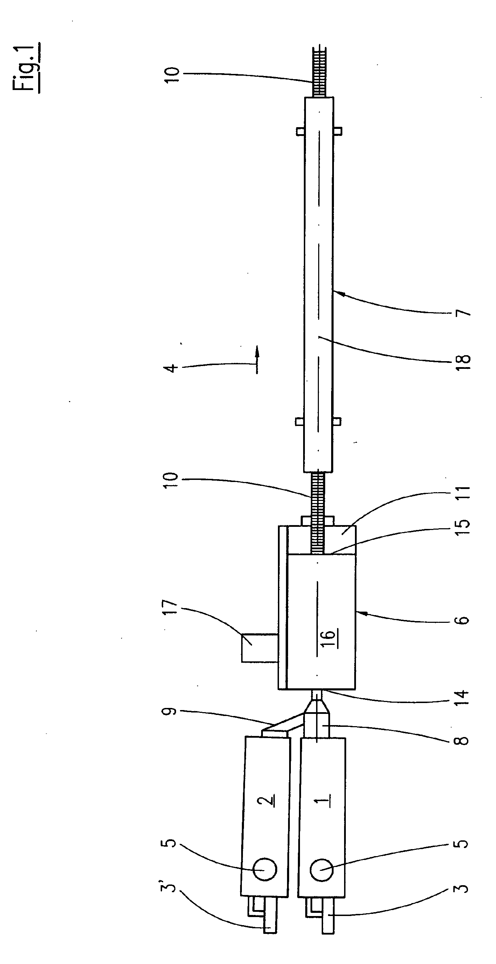

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im Wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der einerseits über ein Ventil an eine Druckgasquelle zum Einblasen von sogenannter Stützluft oder andererseits an Atmosphäre anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Leitungen 27, 28, 29 sind durch einen konzentrisch zur Achse 18 im Spritzkopf 8 ausgebildeten, etwa rohrförmigen Versorgungskanal 31 geführt.

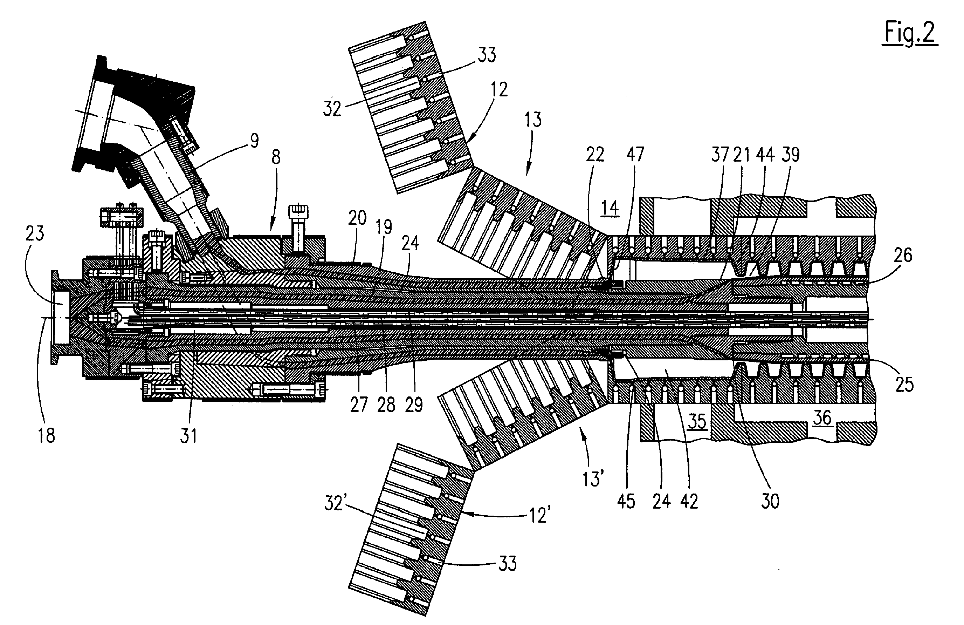

Die Halbkokillen 12, 12' weisen ringförmige Formausnehmungen 32, 32' auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, so dass die Formausnehmungen 32 mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit ringförmigen Wellenbergen 38 versehenen Schlauchs in die Formausnehmungen 32, 32'. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

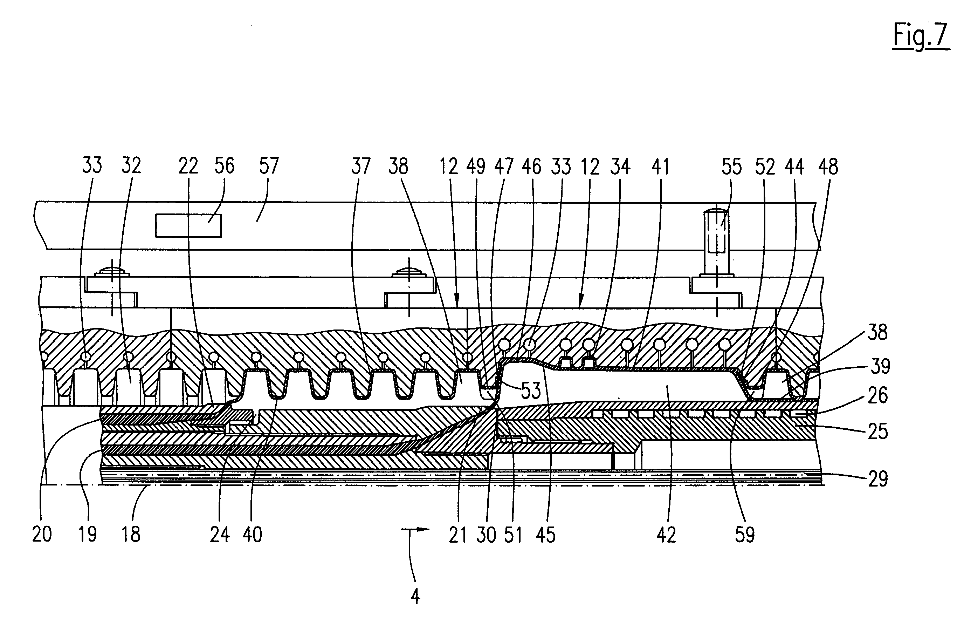

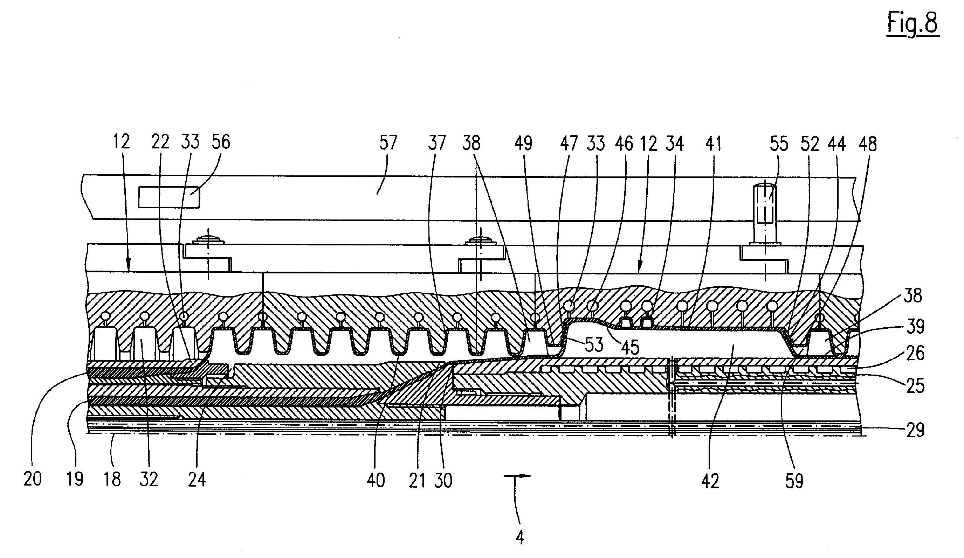

Wie insbesondere aus den Figuren 2, 3, 4, 5 und 7, 8 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine Muffen-Ausnehmung 42 ausgebildet, die also eine im Wesentlichen glatte, zylindrische Wand 43 aufweist. Zwischen der Wand 43 der Muffen-Ausnehmung 42 und der in Förderrichtung 4 voreilenden Formausnehmung 32 ist eine Übergangs-Fläche 44 ausgebildet. An das - in Förderrichtung 4 - nacheilende Ende der Wand 43 der Muffen-Ausnehmung 42 schließen sich Umfangsrillen 34 zur Versteifung der Rohr-Muffe 41 und ein kegelstumpfförmiger Formabschnitt 45 an, in dem ein sich nach außen erweiterndes Einführende 46 der Muffe 41 ausgeformt wird. Daran schließt sich wiederum eine Übergangs-Fläche 47 an, die zur nächsten - in Förderrichtung 4 nacheilenden - Formausnehmung 32 führt.

Soweit die Vorrichtung bis hierher beschrieben ist, ist sie im Wesentlichen aus EP 0 995 579 A2 (entsprechend US 6,458,311 B1) und EP 1 612 030 A1 (entspr. US 7,238,317 B1) bekannt, worauf ausdrücklich verwiesen wird.

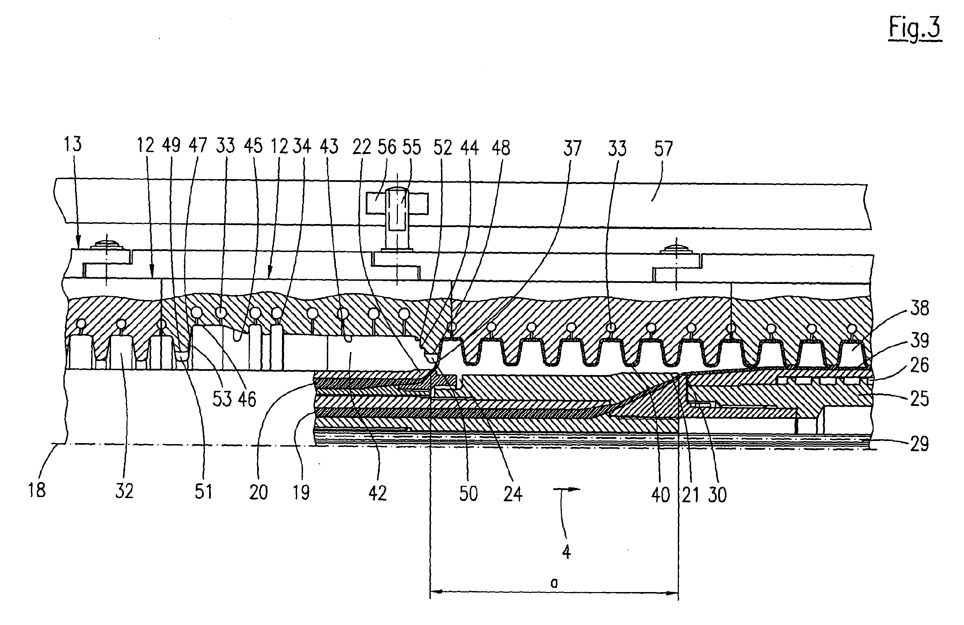

Wie aus Fig. 3 bis 8 hervorgeht, sind an der - in Förderrichtung 4 voreilenden - Übergangs-Fläche 44 und an der - in Förderrichtung 4 nacheilenden - Übergangs-Fläche 47 im Bereich des zu erzeugenden Wellentals 40 an dem die jeweilige Übergangs-Fläche 44 bzw. 47 formenden Ringsteg 48 bzw. 49 der Halbkokille 12, 12' in Richtung der Achse 18 verlaufende schlitzförmige Ausnehmungen 50, 51 ausgebildet. Diese Ausnehmungen 50, 51 verbinden also die jeweilige Übergangs-Fläche 44 bzw. 47 mit der nächstbenachbarten ringförmigen Formausnehmung 32. Die Ausnehmungen 50, 51 jedes Ringstegs 48, 49 sind mittels sich über den Umfang der jeweiligen Übergangs-Fläche 44 bzw. 47 erstreckenden und in letzteren ausgebildeten Verbindungsnuten 52, 53 miteinander verbunden, wie es aus der EP 1 612 030 A1 (entspr. US 7,238,317 B1) bekannt ist.

Wie aus den Fig. 3 bis 8 hervorgeht, erstreckt sich die die Muffen-Ausnehmung 42 aufnehmende Halbkokille 12 über eine solche Länge, dass die Ringstege 48, 49 vollständig in ihr enthalten sind. Die Trennung benachbarter Halbkokillen 12 geht also abweichend von der insoweit nur schematischen Darstellung in Fig. 2 nicht durch den Ringsteg 48 bzw. 49. Dies hat fertigungstechnische Vorteile. Wenn die Muffen-Ausnehmung 42 so lang ist, dass sie sich über mehr als eine Halbkokille 12 erstreckt, dann gilt dies entsprechend für diese Halbkokillen 12.

Wie sich weiterhin aus den Fig. 3 bis 8 ergibt, hat die Innen-Düse 21 in Förderrichtung 4 einen Abstand a von der Außen-Düse 22. Weiterhin weist die Übergangs-Fläche 44 von der Übergangs-Fläche 47 einen Abstand b auf, der also der Längenerstreckung der Muffen-Ausnehmung 42 entspricht. Selbstverständlich kann der Abstand a auch größer als b sein. Beispielsweise kann a so groß sein, dass es auch die die Muffen-Ausnehmung 42 begrenzenden Ringstege 48, 49 oder sogar noch wiederum deren benachbarte Ringstege überdeckt. Es gilt also a ≥ b.

In einer räumlich festen Zuordnung zu der Muffen-Ausnehmung 42 ist ein stabförmiges Schaltglied 55 mit der entsprechenden Halbkokille 12 verbunden, das einen Schalter 56 betätigt, mittels dessen die Drehzahl und damit die Extrudiergeschwindigkeit der Extruder 1, 2 verändert wird, und mittels dessen der Gaskanal 24 bzw. der Gasspalt 30 versorgt werden. Hierzu ist an der Formmaschine 6 ein Haltearm 57 angebracht, der sich oberhalb der Halbkokillen 12, 12' in Förderrichtung 4 erstreckt. An diesem Haltearm 57 ist der von dem Schaltglied 55 zu betätigende Schalter 56 angebracht. Dieser Schalter 56 wird, wie aus Fig. 3 bis 5 hervorgeht, betätigt. Die Veränderung der Drehzahl des Extruders 2, der die Kunststoff-Schmelze zur Herstellung des Außen-Schlauches 37 liefert, die Ansteuerung der sogenannten Stützluft, die aus dem Gaskanal 24 strömt, die Entlüftung über diesen Gas-kanal 24, die Ansteuerung des Gasspaltes 30 am Kalibrierdorn 25 und schließlich die Änderung der Drehzahl und damit der Extrudiergeschwindigkeit des Extruders 1, der die Kunststoff-Schmelze zur Erzeugung des Innen-Schlauches 39 liefert, erfolgen über die Software einer Steuerung, für die der Schalter 56 bei Betätigung ein Referenzsignal liefert.

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird auf den Gaskanal 24 ein geringer Überdruck von 0,2 bis 0,4 bar, gegenüber Atmosphäre gemessen, gegeben. Durch den geringen Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht radial nach außen in den Wellenberg 38 hinein ausgewölbt wird. Beim Abkühlen der Schläuche 37, 39 stellt sich zwischen diesen etwa Atmosphärendruck ein.

Gleichzeitig mit der Aufbringung des erwähnten geringen Überdrucks auf den Gaskanal 24 wird auf den Gasspalt 30 ein Teilvakuum oder ein geringer Überdruck gegeben. Ein Teil-Vakuum wird auf den Gasspalt 30 insbesondere dann gegeben, wenn der für die Schläuche 37, 39 eingesetzte Kunststoff ein Polyethylen oder ein Polypropylen ist. Das Teil-Vakuum am Kalibrierdorn 25 dient dazu, eine glatte Innenfläche des Innen-Schlauches 39 und damit des späteren Innen-Rohres 39' zu erhalten. Es handelt sich hierbei um die sogenannte Vakuumkalibrierung. Wenn PVC als Kunststoff für die Herstellung der Schläuche 37, 39 eingesetzt wird, dann ist es zweckmäßig, auf den Gasspalt 30 einen geringen Überdruck von 0,05 bis 0,15 bar über Atmosphärendruck zu geben. Dieser Druck ist also geringer als derjenige, der durch den Gaskanal 24 auf den Zwischenraum 58 zwischen Innen-Schlauch 39 und Außen-Schlauch 37 gegeben wird. Durch den geringen Überdruck innerhalb des Innen-Schlauches 39 wird bei Einsatz des erwähnten Kunststoffes verhindert, dass der Innen-Schlauch 39 an dem Kalibrierdorn 25 festklebt, bevor er mit dem Außen-Schlauch 37 verschweißt wird.

Während der geschilderten Herstellung des normalen gewellten Verbundrohres 10 laufen die Extruder 1, 2 mit einer vorgegebenen Drehzahl, d.h. sie extrudieren jeweils einen konstanten Massestrom an Kunststoff-Schmelze pro Zeiteinheit.

Wenn in dem in Fig. 3 dargestellten Augenblick die Übergangs-Fläche 44 in den Bereich der Außen-Düse 22 kommt, gelangt das Schaltglied 55 zum Schalter 56, durch dessen Betätigung der Antriebsmotor 3' des Extruders 2 in seiner Drehzahl herabgesetzt wird, so dass die Extrudiergeschwindigkeit, d.h. der Massestrom an Kunststoff-Schmelze pro Zeiteinheit reduziert wird. Durch die Reduktion der Drehzahl des Extruders 2 wird bewirkt, dass der sich aufgrund des Teil-Vakuums an die Übergangs-Fläche 44 und die Wand 43 der Muffen-Ausnehmung 42 anlegende Außen-Schlauch 37 pro Längeneinheit des Verbundrohres 10 weniger Kunststoff enthält als in dem Bereich des normalen gewellten Verbundrohres 10, in dem aus ihm ein Außenrohr 37' mit Wellenbergen 38 geformt wird. Je nach dem Grad der Reduktion der Drehzahl kann die Wanddicke im Bereich der Rohr-Muffe 41 gleich der im Bereich der Wellenberge 38 des Verbundrohres 10 oder größer oder kleiner sein. Eine entsprechende Anpassung bzw. Veränderung der Wanddicke im Bereich der Rohr-Muffe 41 kann ebenfalls in bekannter Weise durch Erhöhung der Geschwindigkeit der die Form 32 bildenden Halbkokillen 12, 12' erreicht werden. Andererseits kann auch über eine Erhöhung der Drehzahl des Extruders 2 bzw. eine Reduktion der Geschwindigkeit oder Form 32 eine Vergrößerung der Wanddicke im Bereich der Rohr-Muffe 41 erreicht werden.

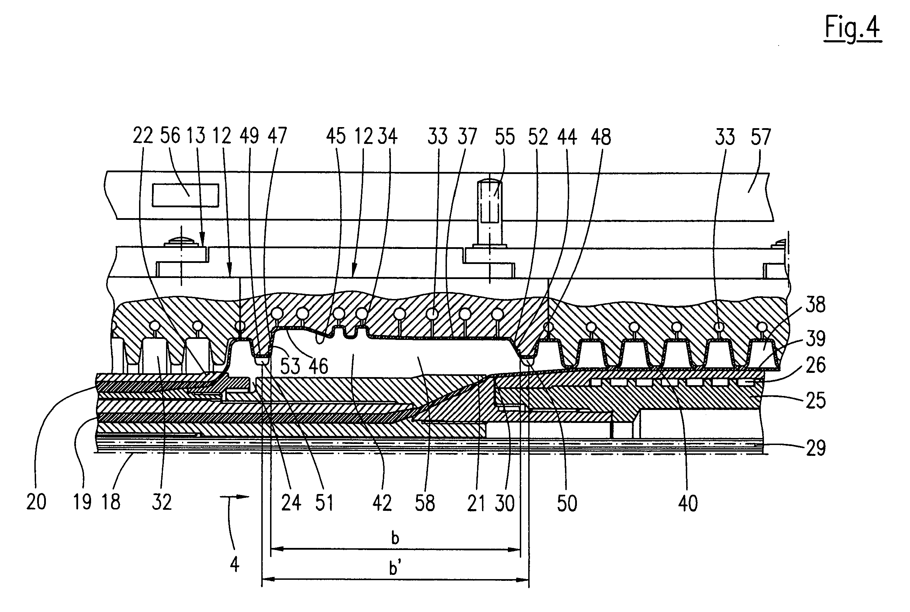

Wenn - etwa entsprechend der Darstellung in Fig. 4 - die Übergangs-Fläche 44 die Innen-Düse 21 erreicht, wird der Unterdruck oder der Überdruck der aus dem Gasspalt 30 austretenden Luft z.B. auf einen Überdruck von ca. 0,05 bis 0,2 bar (bei vorhergehendem Unterdruck) bzw. ca. 0,2 bis 0,4 bar (bei vorhergehendem Überdruck) umgesteuert.

Gleichzeitig wird der Überdruck von dem Gaskanal 24 genommen und dieser an Atmosphäre geschaltet, so dass der Zwischenraum 58 zwischen Innen-Schlauch 39 und Außen-Schlauch 37 im Bereich der Muffen-Ausnehmung 42 entlüftet wird. Der Innen-Schlauch 39 wird nach außen gegen den Außen-Schlauch 37 gedrückt. Wie sich weiterhin aus Fig. 4 ergibt, erfolgt das Andrücken des Innen-Schlauches 39 gegen den Außen-Schlauch 37 erst zu einem Zeitpunkt, wenn der Außen-Schlauch 37 bereits über die volle Länge an der Wand 43 der Muffen-Ausnehmung 42 anliegt. Er liegt also sowohl an dem der Muffen-Ausnehmung 42 in Förderrichtung 4 voreilenden Ringsteg 48 als auch an dem nacheilenden Ringsteg 49 an. Die Ausformung der Rohr-Muffe 41 durch den Innen-Schlauch 39 beginnt also erst, wenn die Ausformung der Rohr-Muffe 41 durch den Außen-Schlauch 37 abgeschlossen ist. Der Innen-Schlauch 39 wird also erst dann gegen den bereits zur Rohr-Muffe ausgeformten Außen-Schlauch 37 angelegt, wenn dieser eine stabile Lage an der Wand 43 der Muffen-Ausnehmung 42 hat, die durch die Abdichtung an den benachbarten Ringstegen 48, 49 und die Wirkung des Teil-Vakuums in der Formausnehmung 32 erfolgt ist. Der Abstand a kann also auch gleich oder größer als der Mitten-Abstand b' der Ringstege 48, 49 sein.

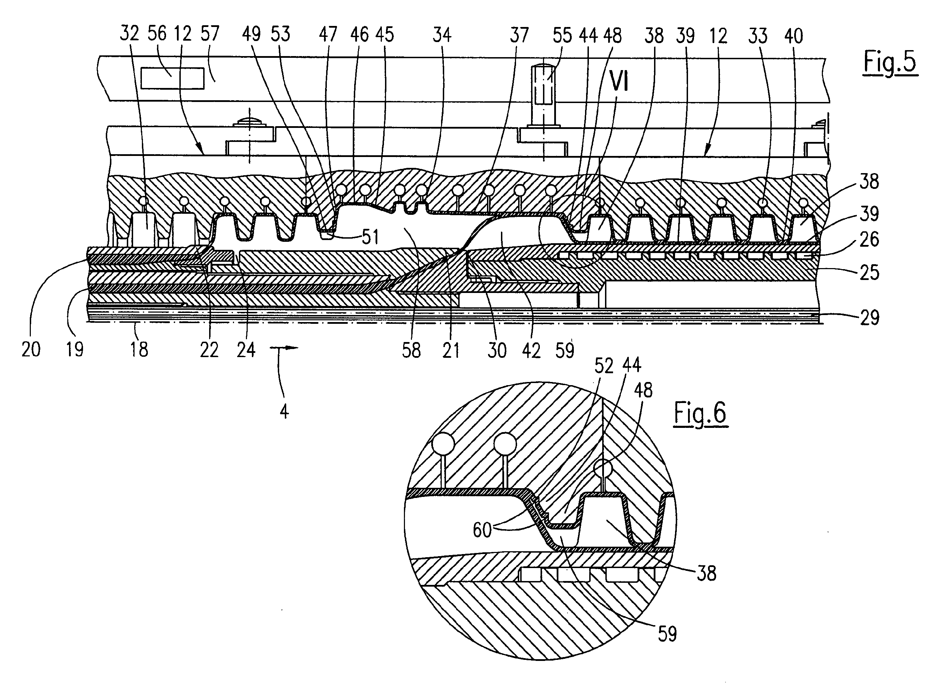

Wie Fig. 5 und 6 entnehmbar ist, legt sich der Außen-Schlauch 37 gegen den Ringsteg 48 und die Übergangs-Fläche 44, wobei gleichzeitig im Bereich der schlitzförmigen Ausnehmungen 50 ein in den benachbarten Wellenberg 38 führender Überström-Kanal 59 geformt wird. An der Übergangs-Fläche 44 legt sich der Außen-Schlauch 37 auch in die Verbindungsnuten 52, wodurch Verbindungs-Kanäle 60 in dem zu formenden Außen-Rohr 37' gebildet werden. Der Innen-Schlauch 39 wird aufgrund des in ihm herrschenden Drucks zwar gegen den Außen-Schlauch 37 gedrückt, aber nicht in die Überström-Kanäle 59 bzw. die Verbindungs-Kanäle 60 eingedrückt bzw. eingeformt, so dass diese Kanäle 59, 60 zwischen dem Außen-Schlauch 37 und dem Innen-Schlauch 39 erhalten bleiben. Die in diesem Bereich befindliche Luft kann also in den in Förderrichtung voreilenden Wellenberg 38 abströmen. In dem Übergangs-Abschnitt 61 zwischen dem normalen Verbundrohr 10 und der in-line angeformten Rohr-Muffe 41 werden also der Außen-Schlauch 37 und der Innen-Schlauch 39 fast vollflächig miteinander verschweißt. Lediglich im Bereich der Überström-Kanäle 59 und der Verbindungs-Kanäle 60 ist diese Verschweißung nicht gegeben. Diese Ausgestaltung ermöglicht es, den Übergangs-Abschnitt 61 - bezogen auf die Förderrichtung 4 - stark radial, also verhältnismäßig steil ansteigend, auszubilden.

Wenn die Übergangs-Fläche 44 über die Innen-Düse 21 hinweggefahren ist, wird der Antriebsmotor 3 des Extruders 1 in der Weise angesteuert, dass beispielsweise seine Drehzahl erhöht wird, d.h. der pro Zeiteinheit extrudierte Massestrom an Kunststoff-Schmelze wird vergrößert. Der Innen-Schlauch 39 erhält also im Bereich der zu erzeugenden Muffe 41 pro Längeneinheit mehr Kunststoff-Schmelze als im Bereich des normalen gewellten Verbundrohres 10, in dem aus ihm nur das glattwandige Innenrohr 39' geformt wird.

Wenn die Übergangs-Fläche 47 der Muffen-Ausnehmung 42 die Außen-Düse 22 überfährt, wird die Extrusionsgeschwindigkeit des den Außen-Schlauch 37 liefernden Extruders 2 wieder auf die ursprüngliche Geschwindigkeit zurückgesetzt. Der Extruder 2 liefert also wieder die Menge Kunststoff-Schmelze pro Zeiteinheit, die zur Erzeugung der Wellenberge 38 erforderlich ist. Der Außen-Schlauch 37 legt sich gegen die Übergangs-Fläche 47 und in die in diesem ausgebildeten Verbindungsnuten 53, wodurch den Verbindungs-Kanälen 60 entsprechende Verbindungs-Kanäle im Außen-Schlauch ausgebildet werden. Anschließend legt sich der Außen-Schlauch gegen den Ringsteg 49 und wird in die schlitzartigen Ausnehmungen 51 unter Bildung von den Überström-Kanälen 59 entsprechende Überströmkanälen ausgeformt.

Wenn die Übergangs-Fläche 47 die Innen-Düse 21 erreicht, dann wird der Gasdruck am Gasspalt 30 auf Teil-Vakuum umgeschaltet oder wieder reduziert und der Gaskanal 24 mit Druckluft bzw. sogenannter Stützluft beaufschlagt, das heißt die verfahrenstechnischen Bedingungen werden wieder auf die Verhältnisse zurückgesetzt, die bei der Produktion des normalen Verbundrohres 10 bestehen. Wenn dann die Übergangs-Fläche 47 die Innen-Düse 21 überfahren hat, wird der Antriebsmotor 3 angesteuert und dadurch die Extrusionsgeschwindigkeit des Extruders 1 auf das ursprüngliche Maß zurückgenommen, so daß wieder die für die Erzeugung des glatten Innenrohres 39' erforderliche Menge an Kunststoff-Schmelze pro Zeiteinheit extrudiert wird.

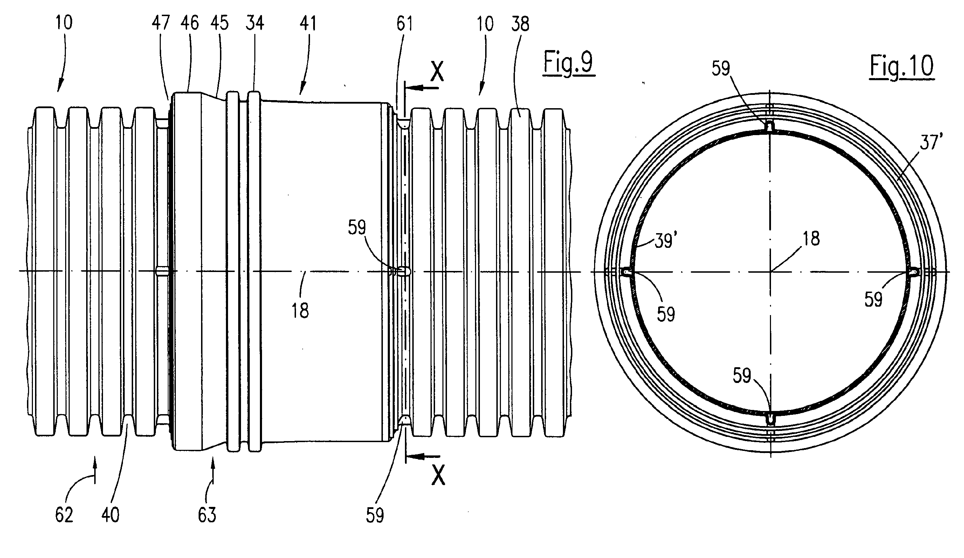

Das in Fig. 9 und 10 dargestellte in-line endlos hergestellte Verbundrohr 10 wird im Bereich der in Förderrichtung 4 nacheilenden Übergangs-Fläche 47 durchtrennt, und zwar mit zwei Schnitten 62, 63.

## Patentansprüche

1. Vorrichtung zur fortlaufenden Herstellung eines Verbund-Rohres,
- wobei mit ringförmigen Formausnehmungen (32) versehene, sich auf einer Formstrecke (16) jeweils paarweise zu einer Form mit einer Mittel-Längs-Achse (18) ergänzende Halbkokillen (12, 12') im Kreislauf und in einer Förderrichtung (4) geführt angeordnet sind,
- wobei die Formausnehmungen (32) an in den Halbkokillen (12, 12') ausgebildete Teil-Vakuum-Kanäle (33) angeschlossen sind,
- wobei der Formstrecke (16) ein Spritzkopf (8) mindestens eines Extruders (1, 2) vorgeordnet ist,
- wobei der Spritzkopf (8) mit einer Außen-Düse (22) zur Extrusion eines Außen-Schlauches (37) und in Förderrichtung (4) nachgeordnet mit einer Innen-Düse (21) zur Extrusion eines Innen-Schlauches (39) und an seinem in Förderrichtung (4) hinten liegenden Ende mit einem Kalibrierdorn (25) versehen ist,
- wobei die Innen-Düse (21) und die Außen-Düse (22) in Förderrichtung (4) einen Abstand a aufweisen,
- wobei zwischen Außen-Düse (22) und Innen-Düse (21) aus dem Spritzkopf (8) mindestens ein Gaskanal (24) ausmündet,
- wobei zwischen Innen-Düse (21) und Kalibrierdorn (25) mindestens ein zusätzlicher Gas-Kanal (30) aus dem Spritzkopf (8) ausmündet,
- wobei mindestens ein Paar Halbkokillen (12, 12') mit einer Muffen-Ausnehmung (42) versehen ist,
- wobei die Muffen-Ausnehmung (42) in Förderrichtung (4) eine Erstreckung b hat,
- wobei an zwischen der Muffen-Ausnehmung (42) und benachbarten Formausnehmungen (32) befindlichen Ringstegen (48, 49) jeweils eine - bezogen auf die Mittel-Längs-Achse (18) - nach außen gerichtete Übergangs-Fläche (44, 47) ausgebildet ist,
**dadurch gekennzeichnet,**
**dass** für den Abstand a der Innen-Düse (21) von der Außen-Düse (22) in Bezug auf die Erstreckung b der Muffen-Ausnehmung (42) in Förderrichtung (4) gilt: a ≥ b.

2. Vorrichtung nach Anspruch 1, **dadurch gekennzeichnet,**
**dass** gilt: a > b.

3. Vorrichtung nach Anspruch 1, **dadurch gekennzeichnet,**
**dass** - bezogen auf die Förderrichtung (4) - stromaufwärts und stromabwärts zwischen der Muffen-Ausnehmung (42) und jeweils einer benachbarten Formausnehmung (32) ein Ringsteg (48, 49) ausgebildet ist, und
**dass** der Abstand a der Innen-Düse (21) und der Außen-Düse (22) mindestens dem Mitten-Abstand b' der Ringstege (48, 49) voneinander entspricht.
